(19) Europäisches Patentamt
European Patent Office
Office européen des brevets

(11) **EP 2 206 667 B1**

(12) **EUROPEAN PATENT SPECIFICATION**

(45) Date of publication and mention
of the grant of the patent:
**07.03.2012 Bulletin 2012/10**

(51) Int Cl.:
**B65H 26/02** *(2006.01)*   **B41F 33/18** *(2006.01)*

(21) Application number: **10150399.3**

(22) Date of filing: **11.01.2010**

(54) **Method in connection with unwinder**

Verfahren im Zusammenhang mit einem Abwickler

Procédé relatif à un dérouleur

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **12.01.2009 FI 20095020**

(43) Date of publication of application:
**14.07.2010 Bulletin 2010/28**

(73) Proprietor: **ABB Oy**
**00380 Helsinki (FI)**

(72) Inventors:
• **Leppä, Ari**
**02600, Espoo (FI)**

• **Gruzdaitis, Jukka**
**01600, Vantaa (FI)**

(74) Representative: **Valkeiskangas, Tapio Lassi
Paavali**
**Kolster Oy Ab**
**Iso Roobertinkatu 23**
**P.O. Box 148**
**00121 Helsinki (FI)**

(56) References cited:
**WO-A1-2008/096034    DE-U1- 29 604 401
US-A- 3 977 621    US-A1- 2002 008 173
US-A1- 2004 182 965**

## Description

### Background of the invention

The invention relates to decelerating a machine reel of an unwinder and especially a machine reel in unwinders of post-processing machines in the paper industry. Such a machine is presented in a publication DE 29 604 401 which is considered the closest prior art document.

When making a continuous material web, for example paper on a paper machine, the material finished by the machine and rolled onto a reel is often processed with post-processing machines. Examples of such post-processing machines related to the post-processing of paper include various off-line calenders, winders, and rewinders. Common features of these post-processing machines are that the material is unwound with an unwinder, processed in a desired manner and rewound with a rewinder.

Increasing the speeds of paper machines and corresponding machines producing a continuous material web also produces pressure to increase the speeds of the post-processing devices and to minimize shutdown times. One problematic point in post-processing devices is associated with the operation of unwinders during a material web break. The situation is especially pronounced in winders that make customized reels, that is, smaller reels ordered by the customer, from machine reels. On a machine reel, the paper or corresponding material has the width of the production machine, and the width is cut into narrower and smaller reels ordered by the customer by using a winder.

Several customized reels are typically obtained from one machine reel, in other words, the unwinder of the winder needs to be stopped several times during one machine reel to remove the finished customized reels and to start new ones. Even though the winder speeds are great, the releases of customized reels from them slow the average speed. If a malfunction stopping the operation of the winder occurs, the winder may become a part slowing the production of the paper mill.

One problem in post-processing devices is associated with stopping the machine reel of an unwinder during a web break. Material is unwound from the unwinder at great speed, and in a normal situation, the material is wound with a rewinder after processing. If the material web breaks between the unwinder and rewinder, the material will unwind on the floor of the mill hall. A great deal of material unwinding at great speed accumulates quickly on the floor, and before the restart of production, this material must be collected from the floor. When a web break is detected, the unwinder is stopped as quickly as possible to minimize the break time and material loss.

Stopping unwinders during web break situations is done in accordance with the prior art by using a mechanical brake at its full capacity. In addition, a motor is used for decelerating when the deceleration torque exceeds the capacity of the mechanical brake. The deceleration torque provided by the motor is limited in such a manner that the total deceleration torque does not exceed the limits of the system mechanics. A mechanical brake is obligatory equipment defined by standards, with which a machine reel in an unwinder is made to remain unrotational, and the machine reel may be stopped in a specific time.

A problem with the mechanical brake is stopping the unwinder at high rotation speeds, in particular. The mechanical brake decelerates at a fixed deceleration torque, so at high rotation speeds the power used in deceleration easily damages the mechanical brake and makes it unusable. The mechanical brake also cannot be adjusted in a simple manner so that deceleration power could be increased or decreased during deceleration. Thus, a web break may cause a long shutdown, when the brakes of the unwinder become unusable during one deceleration.

In deceleration, mechanical brakes transform the energy bound to the machine reel into heat that heats the brakes. This heating of the brakes may also cause a fire hazard, as the material releases uncontrollably from the unwinder, whereby dry paper or the like may come into contact with the heated brakes.

### Brief description of the invention

It is an object of the invention to develop a method and an apparatus implementing the method in such a manner that the above-mentioned problems are solved. The object of the invention is achieved with a method and apparatus that are characterised by what is stated in the independent claims. Preferred embodiments of the invention are set forth in the dependent claims.

The invention is based on replacing as extensively as possible the deceleration done with mechanical brakes by a motor deceleration and on using the mechanical brake when necessary only at speeds lower than a given speed rate. The inertia and rotation speed of the machine reel or the like in the unwinder is continuously known, so the deceleration torque required to stop the reel in a required time may be calculated. In a corresponding manner, the obtained deceleration torque depending on the operating situation of the motor may also be calculated, if necessary.

The solution of the invention provides the advantage that the deceleration situation is easier to control, because the deceleration torque provided with a motor may be adjusted as necessary. In addition, the invention provides improved energy utilisation, because the energy stored in the rotating mechanical system may be returned to the supplying network through a frequency converter.

Further, because the mechanical brakes are not loaded as much as in the known deceleration method, the problems related to the wear and heating of the mechanical brakes are diminished, and thus the capacity of the device where the unwinder resides increases due to the reduced number of maintenance stops. Thanks to the mechanical brakes that do not heat up so much, fire safety also improves.

**Brief description of figures**

The invention will now be described in greater detail by means of preferred embodiments and with reference to the attached drawings, in which

> Figure 1 shows an example of the general principle of an electric drive in connection with a paper post-processing machine;
> Figure 2 is a graphical representation of the machine reel inertia as a function of the diameter of the machine reel;
> Figure 3 is a graphical representation of the required deceleration torque as a function of the rotation speed of the machine reel;
> Figure 4 is a graphical representation of a deceleration manner according to the invention; and
> Figure 5 is an example of the maximum values of the torque used in deceleration as a function of the rotation speed of the machine reel.

**Detailed description of the invention**

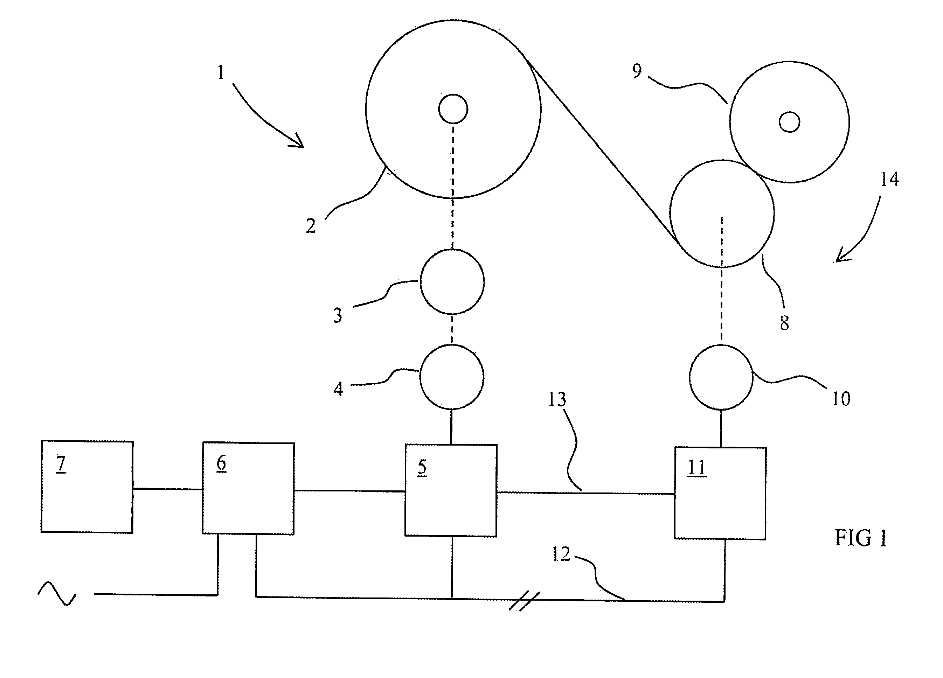

Figure 1 shows the principle of an electric drive in connection with a post-processing machine related to papermaking. This post-processing machine is shown only in connection with the electric drive in such a manner that only the parts that are necessary for describing the invention are shown of the post-processing machine.

Figure 1 shows in particular an unwinder 1, in which a machine reel 2 obtained from a paper machine is placed. A motor 4 and mechanical brake 3 are fastened to the axle of the machine reel. The motor 4 is controlled by an inverter 5 that receives its supply from a direct-current busbar system 12. A feed unit 6 generates direct current to this direct-current busbar system 12 from the alternating current of the supply network.

Further, Figure 1 shows a rewinder 14 that in connection with winders forms customized reels 9 from the paper on a machine reel. In the rewinder, the paper web turns around a drive roll 8 on to the customized reel. The roll 8 is controlled by a motor 10 supplied by an inverter 11. In Figure 1, both inverters are shown as coupled to the same direct-current supply 12. The feed unit 6 together with the inverters forms one supply group in Figure 1. Figure 1 also shows a control system 7 that is connected via a data bus to both the feed unit and both inverters. The control system 7 provides to the inverters control information, on the basis of which the motors controlled by the inverters provide the required web speed and paper web tightness, for instance.

The inertia of the machine reel is, if so desired, continuously known to the control system or, correspondingly, immediately calculable. The inertia may be calculated with the equation

$$J = \pi \rho l \frac{(d^4 - d_{min}^4)}{32} + J_{roll} \tag{1}$$

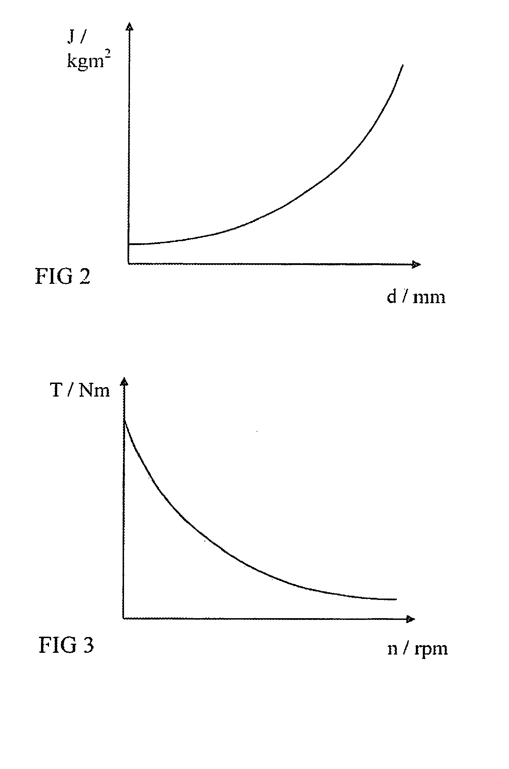

wherein $\rho$ is the density of the paper on the reel, $l$ is the width of the paper web, d is the diameter of the machine reel, $d_{min}$ is the diameter of the roll, and $J_{roll}$ is the inertia of the roll. Figure 2 shows a curve that depicts the change in the inertia as a function of the diameter. As shown by the diagram, the inertia increases exponentially as the diameter increases. The diameter of the reel is determined continuously either on the basis of the amount and thickness of paper on the reel or by physically measuring the size of the reel with an automated measuring apparatus or by calculation.

The rotation speed (*n*) of the motor turning the machine reel is, in turn, dependent on the web speed (*v*) and diameter (*d*) of the machine reel in accordance with the equation

$$n = \frac{v}{\pi d} i \tag{2}$$

wherein the coefficient i depends on the gear ratio between the possibly used motor and roll. The web speed is typically held constant, whereby as the reel diameter decreases, the rotation speed increases correspondingly.

The deceleration torque that is required for stopping the roll in time *t* from angular speed w may be calculated with the equation

$$T_{break} = J \frac{d\omega}{dt} .$$

(3)

The deceleration torque required for the stopping is directly proportional to the angular speed and inertia and, as earlier mentioned, the inertia diminishes strongly as the diameter decreases. Figure 3 shows the magnitude of the torque required for deceleration as a function of the rotation speed when assuming that the web speed and deceleration time are constant. Figure 3 shows how the deceleration torque required for stopping diminishes as the rotation speed increases, that is, when the inertia is higher, the torque required for stopping needs to be higher despite the lower rotation speed. As mentioned earlier, for deceleration, the situation is, however, most problematic when the rotation speed is high, because when decelerating with mechanical brakes, the decelerating force directed to the rotating roll produces a power that is proportional to the rotation speed and the torque produced by the decelerating power. Equations (2) and (3) use the terms angular speed and rotation speed. As is known, the ratio between the angular speed and rotation speed is linear, and the angular speed is obtained by multiplying the rotation speed with the constant $2\pi$.

All above-mentioned measured or calculated quantities are known and available to the control system 7. The rotation system is also capable of performing controls related to other devices than the motors 4, 10. For example, the control system may control the using of the mechanical brake 3 either directly or through a communications connection and another control system.

In the method of the invention, a break in the paper web exiting an unwinder is detected. The break is typically detected automatically as the web suddenly becomes loose. The tightness of the web is typically adjusted in such a manner that the rewinder is speed-controlled and the unwinder is torque-controlled to obtain required web tightness. Information on the web tightness is transmitted from the inverter 5 to the control system 7.

Further, according to the invention, the inertia of the machine reel is determined. The inertia may be calculated with the above equation (1), and in general, instantaneous inertia is continuously known to the control or adjustment system 7 of the motor. In the method, it is also possible to use during the entire deceleration the inertia of the instant after the web break. During deceleration, the inertia of the reel decreases as the material unwinds. If the inertia of the break instant is used in the method, the roll is stopped somewhat quicker than when using the instantaneous inertia that is updated as the reel unwinds. According to a preferred embodiment of the invention, the inertia of the machine reel is continuously calculated during deceleration, whereby the entire deceleration process is thoroughly controlled.

In the method of the invention, the angular speed of the machine reel is continuously determined. The determination of the angular speed may be performed with separate sensors, or correspondingly, the electric drive may determine the angular speed independently on the basis of its internal models in a manner known per se. Information on the angular speed is transmitted or calculated in the control system 7.

Safety regulations and the like often define the allowed time that may elapse in the stopping of the machine reel. This time may be the same time as that used to accelerate the machine reel. When the angular speed and inertia of the machine reel are known, it is possible to use equation (3) to calculate the deceleration torque with which the machine reel may be stopped in the required time. During deceleration, as the rotation speed decreases, equation (3) is used to continuously calculate a new value for the required torque, taking into consideration the already elapsed time from the initial moment of the break or deceleration start.

According to the invention, the machine reel is decelerated electrically by driving the motor regeneratively. When the motor serves as a generator, power is obtained from the rotating reel and transformed in the motor into electric power that may be supplied to the network, when the feed unit is equipped with a suitable bidirectional network bridge.

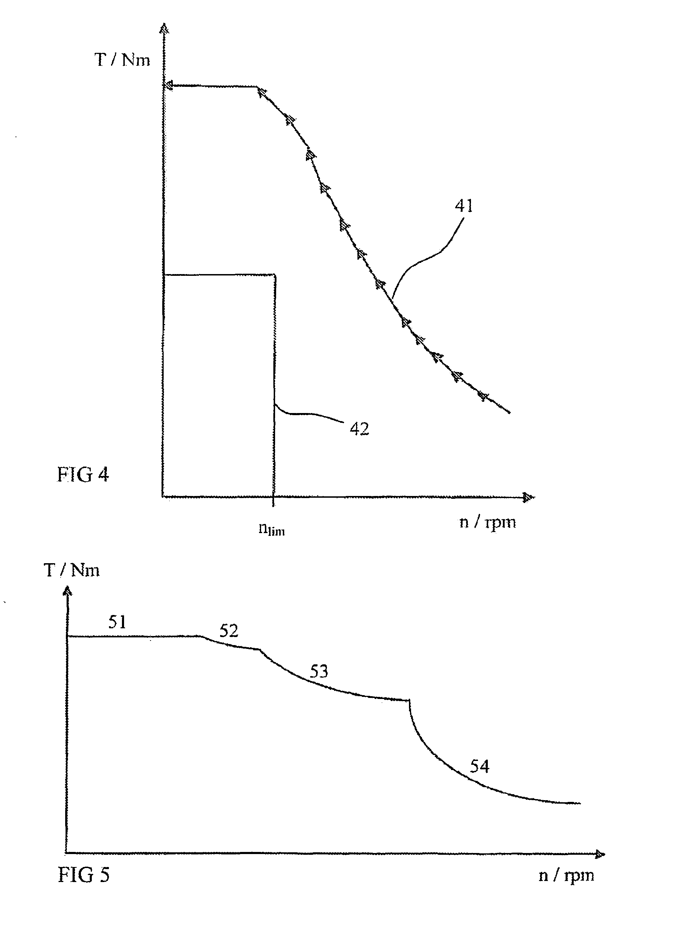

When the motor serves as a generator, the deceleration torque produced by it depends on the rotation speed range of the motor. Figure 5 shows the torque to be produced as a function of the rotation speed. As the machine reel rotates at high speed, the torque provided in a field weakening range is limited by a pull-out torque limit 54 of the motor. As the speed decreases in the range 53, the torque-limiting factor is the feed unit that defines the maximum power to be transferred to the network which cannot be exceeded. The feed unit is dimensioned for normal drive situations in such a manner that it is sufficient in all normal drive situations. In the structure shown in Figure 1, it is possible to feed through the feed unit back to the network the power obtained from both the unwinder and rewinder when they are decelerating. The feed unit typically has a fixed amount of power transmission capacity reserved for each motor. However, as in the case of Figure 1, the rewinder can be stopped faster than the unwinder due to smaller masses, it is advantageous to transfer the power capacity of the feed unit reserved for the rewinder in a deceleration situation to the unwinder, whereby the power limit 53 of Figure 5 and thus also the used deceleration torque may be increased.

As the speed further decreases while the deceleration progresses, the torque is limited by the current limit 52 of the inverter. The inverters are dimensioned for a certain maximum current that is not safe or possible to exceed. Thus, the deceleration torque of the motor should be limited by keeping the current at the allowed maximum value. As the rotation speed decreases, the next area is a torque limit 51, which is the maximum torque that the motor is capable of producing. This maximum torque may be used until the motor and machine reel stop.

The deceleration event described above does not necessarily begin by limiting the torque due to the pull-out torque. Depending on the rotation speed, the deceleration may be begun in any of the above-mentioned ranges.

According to the invention, the machine reel is decelerated electrically to stop it. Figure 4 shows an example of the deceleration event and especially of the torque 41 provided by electric deceleration as a function of the rotation speed. Figure 4 shows that as the speed decreases, the deceleration torque is increased in accordance with the above principles.

According to the idea of the invention, a mechanical brake is also used when the rotation speed of the machine reel is lower than the predefined rotation speed $n_{lim}$ and when electrical deceleration alone is not enough to stop the machine reel in a predefined time. Figure 4 also shows the deceleration torque 42 to be produced with a mechanical brake. The size of the deceleration torque produced at low operating speeds is thus a sum of the mechanical deceleration torque 42 and electrical deceleration torque 41. Introducing the mechanical brake after a certain limiting operating speed prevents the destruction of the brakes due to the excessive power that transforms into heat during deceleration.

When achieving the above-mentioned limit speed $n_{lim}$, the deceleration torque is preferably defined that is achievable by electric deceleration. If this deceleration torque is sufficient to stop the rotating mass in the required time, there is no need to use the mechanical brake, and all the energy bound to the rotating mass may be transformed into electrical energy. The deceleration torque obtained by electrical deceleration may be defined by calculation at any time, and the magnitude of this deceleration torque depends on the rotation speed, as shown in Figure 5. It is also possible that immediately as the deceleration starts, the deceleration energy obtained with the motor is defined and this energy is compared with the energy of the rotational movement of the rotating machine reel. It is then possible to determine right at the start of the deceleration, whether the mechanical brake will be needed to decelerate the reel. The energy of the machine reel can simply be calculated from the inertia and angular speed, and the deceleration energy may be defined as a surface area delimited by the curve of Figure 5 between the speed zero and the web break speed. If the energy of the machine reel is higher than the deceleration energy obtained by electrical deceleration, the mechanical brake should be used. The calculation may be performed by first calculating the stopping time achieved by electrical deceleration, from which deceleration is obtained, and on the basis of this, the use of the mechanical brake is decided on. It is also thinkable that, on the basis of these calculations, the time instant for taking the mechanical brake into use is decided.

When the rotating machine reel has stopped, the mechanical brake is locked. In an apparatus implementing the method of the invention, the deceleration force of the mechanical brake may be reduced in comparison with the earlier force. If the mechanical brake is hydraulic, for instance, the hydraulic pressure may be decreased, because most of the deceleration is done electrically, and the mechanical brake is used at low rotation speeds only or in malfunctions of the electrical network.

According to a preferred embodiment of the inventive method, the electrical deceleration torque is limited relative to the maximum value of the mechanics. In other words, the deceleration torque must not be so high as to damage the mechanics of the system. This should also be taken into consideration in a situation where the mechanical brake is taken into use. If the mechanical brake must be taken into use to stop the reel in the defined time, the fact should at the same time be considered that the sum torque of the electrical and mechanical decelerations should not be higher than the limit set by the mechanics. The torque obtained by electrical deceleration may be adjusted, and because the torque obtained by the mechanical brake is constant and known, the limit set by the mechanics may be taken into consideration by adjusting the torque of the electrical deceleration.

The apparatus of the invention comprises means for detecting a break in a paper web from the machine reel, means for continuously determining the inertia of the machine reel, means for continuously determining the angular speed of the machine reel, means for determining the torque required to decelerated the machine reel on the basis of the inertia and angular speed to stop the machine reel in a predefined time, means for electrically decelerating the machine reel for the purpose of stopping it, and means for using a mechanical brake when the rotation speed of the machine reel is lower than a predefined rotation speed and when the torque to be obtained by electrical deceleration is too small to stop the machine reel in a predefined time. These means may be implemented as a combination of a control system, feed unit, and inverter, while one of these elements comprises calculation capacity for performing the required calculations.

The calculation capacity typically resides in the control system that may receive measuring information from the process as well as data produced by the feed unit and inverters. On the basis of this data, the control system calculates controls and produces output signals for performing the deceleration in accordance with the invention.

The invention may be implemented in existing systems or by using separate elements and devices in a centralized or distributed manner. Existing devices, such as control systems, typically comprise a processor and memory that may be utilized in implementing the functionality of the embodiments of the invention. Thus, all alterations and configurations required to implement the embodiments of the invention may be performed using software routines that in turn may be implemented as added or updated software routines. If the functionality of the invention is implemented by means of software, the software may be provided as a computer program product that comprises a computer program code, the execution of which in a computer makes the computer or corresponding hardware perform the functionality according to the invention as described above. This type of computer program code may be stored on a computer-readable medium, such as a suitable storage medium, for instance a flash memory or disk storage, from which it may be read to a unit or units that execute the program code. In addition, this type of program code may be loaded onto a unit or units for execution over a suitable data network, and it may replace or update a possibly existing program code.

It is obvious to a person skilled in the art that the basic idea of the invention may be implemented in many different ways. The invention and its embodiments are thus not restricted to the examples described above, but may vary within the scope of the claims.

## Claims

1. A method for decelerating an inverter-controlled machine reel in a paper machine, the method comprises the steps of detecting a break in a paper web from the machine reel,
   determining the inertia of the machine reel,
   determining continuously the angular speed of the machine reel,
   determining continuously the torque required to decelerate the machine reel on the basis of the inertia and angular speed for the purpose of stopping the machine reel in a predefined time,
   decelerating the machine reel electrically to stop it,
   **characterized by** using a mechanical brake, when the rotation speed of the machine reel is lower than the predefined rotation speed and when the torque achieved by electrical deceleration is too low to stop the machine reel in the predefined time.

2. A method as claimed in claim 1, **characterized by** determining the inertia of the machine reel continuously during deceleration.

3. A method as claimed in claim 1 or 2, **characterized by** decelerating the machine reel electrically using the highest possible torque available.

4. A method as claimed in claim 1, 2, or 3 **characterized in that** the method comprises the step of determining continuously the magnitude of the deceleration torque obtained by electrical deceleration.

5. A method as claimed in claim 4, **characterized in that** the method also comprises the steps of limiting the deceleration torque obtained by electrical deceleration, when the instantaneous deceleration torque exceeds a limit set for the mechanics of the system.

6. A method as claimed in any one of the preceding claims 1 to 5, **characterized in that** the method comprises the steps of determining, after the paper web from the machine reel has broken, the energy bound to the rotational movement of the machine reel on the basis of the angular speed and inertia of the machine reel,
   determining the amount of energy that is obtained by electrical deceleration,
   comparing the energy amounts determined above, and
   determining the need to use a mechanical brake, when the amount of energy obtained by electrical deceleration is smaller than the energy bound to the rotational movement.

7. A method as claimed in claim 6, **characterized in that** the method also comprises the step of determining the time to use the mechanical brake on the basis of the comparison of the energy amounts.

8. An apparatus for decelerating an inverter-controlled machine reel (2) in a paper machine, the apparatus comprising a mechanical brake (3) suitable for decelerating the machine reel, the apparatus comprises
   means for detecting a break in a paper web from the machine reel (2),
   means for determining the inertia of the machine reel (2),
   means for continuously determining the angular speed of the machine reel,

Means for determining the torque required to decelerate the machine reel on the basis of the inertia and angular speed for the purpose of stopping the machine reel in a predefined time,

means (4, 5, 6, 7) for decelerating the machine reel electrically to stop it,

**characterized by** means for using the mechanical brake (3), when the rotation speed of the machine reel (2) is lower than the predefined rotation speed and when the torque achieved by electrical deceleration is too small to stop the machine reel in a predefined time.

9. A computer program product that comprises a computer program code, the execution of which in a computer makes the computer perform the steps of

detecting a break in a paper web from the machine reel,

determining the inertia of the machine reel,

determining continuously the angular speed of the machine reel,

determining continuously the torque required to decelerate the machine reel on the basis of the inertia and angular speed for the purpose of stopping the machine reel in a predefined time,

generating a signal for decelerating the machine reel electrically to stop it,

**characterized by** generating a signal for using the mechanical brake, when the rotation speed of the machine reel is lower than the predefined rotation speed and when the torque achieved by electrical deceleration is too small to stop the machine reel in a predefined time.

## Patentansprüche

1. Ein Verfahren zum Abbremsen einer durch einen Umrichter kontrollierten Maschinenrolle in einer Papiermaschine, wobei das Verfahren die folgenden Schritte aufweist

eine Zerreißung einer Papierbahn von der Maschinenrolle entdecken,

die Inertia der Maschinenrolle bestimmen,

die Drehgeschwindigkeit der Maschinenrolle kontinuierlich bestimmen,

das erforderliche Drehmoment zum Abbremsen der Maschinenrolle auf Basis der Inertia und der Drehgeschwindigkeit mit dem Ziel, die Maschinenrolle in einer im Voraus festgelegten Zeit zum Stehen zu bringen, bestimmen,

die Maschinenrolle elektrisch abbremsen, um sie zum Stehen zu bringen,

**dadurch gekennzeichnet, dass** eine mechanische Bremse gebraucht wird, wenn die Rotationsgeschwindigkeit der Maschinenrolle niedriger als die im Voraus bestimmte Rotationsgeschwindigkeit ist und wenn das durch elektrisches Abbremsen erzielte Drehmoment zu niedrig ist, die Maschinenrolle in einer im Voraus bestimmten Zeit zum Stehen zu bringen.

2. Ein Verfahren nach Patentanspruch 1 **dadurch gekennzeichnet, dass** die Inertia der Maschinenrolle während des Abbremsens kontinuierlich bestimmt wird.

3. Ein Verfahren nach Patentanspruch 1 oder 2, **dadurch gekennzeichnet, dass** die Maschinenrolle mit Hilfe des höchst möglichen zur Verfügung stehenden Drehmoments elektrisch abgebremst wird.

4. Ein Verfahren nach Patentanspruch 1, 2 oder 3 **dadurch gekennzeichnet, dass** das Verfahren den Schritt aufweist, dass kontinuierlich die Größe des durch das elektrische Abbremsen erhaltene Abbremsdrehmoments bestimmt.

5. Ein Verfahren nach Patentanspruch 4 **dadurch gekennzeichnet, dass** das Verfahren auch die Schritte aufweist, dass das durch das elektrische Abbremsen erhaltene Abbremsdrehmoment begrenzt wird, wenn das unmittelbare Abbremsdrehmoment eine für die Mechanik des Systems gesetzte Grenze überschreitet.

6. Ein Verfahren nach einem der vorangehenden Patentansprüche 1 bis 5 **dadurch gekennzeichnet, dass** das Verfahren die Schritte aufweist, dass, nachdem die Papierbahn von der Maschinenrolle zerrissen ist, die an die Rotationsbewegung der Maschinenrolle auf der Basis der Drehgeschwindigkeit und der Inertia der Maschinenrolle gebundene Energie bestimmt wird,

die durch das elektrische Abbremsen erhaltene Energiemenge bestimmt wird,

die oben bestimmten Energiemengen verglichen werden, und

der Bedarf, mechanisches Abbremsen zu gebrauchen, wenn die durch das elektrische Abbremsen erhaltene Energiemenge kleiner ist als die an die Rotationsbewegung gebundene Energie, bestimmt wird.

7. Ein Verfahren nach Patentanspruch 6 **dadurch gekennzeichnet, dass** das Verfahren auch den Schritt aufweist, dass der Zeitpunkt, die mechanische Bremse zu benutzen, auf der Basis des Vergleichs der Energiemengen bestimmt wird.

8. Eine Vorrichtung zum Abbremsen einer durch einen Umrichter kontrollierten Maschinenrolle (2) in einer Papiermaschine, wobei die Vorrichtung eine für das Abbremsen der Maschinenrolle geeignete mechanische Bremse (3) aufweist, die Vorrichtung weist Folgendes auf
Mittel zum Entdecken einer Zerreißung einer Papierbahn von der Maschinenrolle,
Mittel zur Bestimmung der Inertia der Maschinenrolle (2),
Mittel zur kontinuierlichen Bestimmung der Drehgeschwindigkeit der Maschinenrolle,
Mittel zur Bestimmung des zum Abbremsen der Maschinenrolle erforderlichen Drehmoments auf der Basis der Inertia und der Drehgeschwindigkeit mit dem Ziel, die Maschinenrolle in einer im Voraus festgelegten Zeit zum Stehen zu bringen,
Mittel (4, 5, 6, 7) zum elektrischen Abbremsen der Maschinenrolle, um sie zum Stehen zu bringen,
**dadurch gekennzeichnet, dass** Mittel zum Gebrauch einer mechanischen Bremse (3) vorhanden sind, wenn die Rotationsgeschwindigkeit der Maschinenrolle (2) niedriger als die im Voraus bestimmte Rotationsgeschwindigkeit ist und wenn die durch das elektrische Abbremsen erhaltene Drehmoment zu klein ist, um die Maschinenrolle in einer im Voraus bestimmten Zeit zum Stehen zu bringen.

9. Ein Computerprogrammprodukt, das einen Computerprogrammkode aufweist, dessen Durchführen in dem Computer den Computer folgende Schritte durchführen lässt
eine Zerreißung in einer Papierbahn von der Maschinenrolle entdecken,
die Inertia der Maschinenrolle bestimmen,
die Drehgeschwindigkeit der Maschinenrolle kontinuierlich bestimmen,
das zum Abbremsen der Maschinenrolle erforderliche Drehmoment auf der Basis der Inertia und der Drehgeschwindigkeit mit dem Ziel, die Maschinenrolle in einer im Voraus bestimmten Zeit zum Stehen zu bringen, kontinuierlich bestimmen,
ein Signal für das elektrische Abbremsen der Maschinenrolle, um sie zum Stehen zu bringen, generieren,
**dadurch gekennzeichnet, dass** ein Signal zum Gebrauch der mechanischen Bremse generiert wird, wenn die Rotationsgeschwindigkeit der Maschinenrolle niedriger als die im Voraus bestimmte Rotationsgeschwindigkeit ist und wenn das durch das elektrische Abbremsen erhaltene Drehmoment zu klein ist, um die Maschinenrolle in einer im Voraus bestimmten Zeit zum Stehen zu bringen.

## Revendications

1. Procédé destiné à décélérer une bobine de machine commandée par un convertisseur dans une machine à papier, le procédé comprenant les étapes consistant à :

détecter une rupture dans une feuille de papier continue en provenance de la bobine de machine ;
déterminer l'inertie de la bobine de machine ;
déterminer de manière continue la vitesse angulaire de la bobine de machine ;
déterminer de manière continue le couple requis pour décélérer la bobine de machine sur la base de l'inertie et de la vitesse angulaire afin d'arrêter la bobine de machine dans un temps prédéfini ;
décélérer de manière électrique la bobine de machine pour l'arrêter ;
**caractérisé par** l'utilisation d'un frein mécanique lorsque la vitesse de rotation de la bobine de machine est inférieure à la vitesse de rotation prédéfinie et lorsque le couple obtenu par la décélération électrique est trop faible pour arrêter la bobine de machine dans le temps prédéfini.

2. Procédé selon la revendication 1, **caractérisé par** une détermination de manière continue de l'inertie de la bobine de machine au cours de la décélération.

3. Procédé selon la revendication 1 ou la revendication 2, **caractérisé par** une décélération de manière électrique de la bobine de machine en utilisant le couple le plus élevé possible qui soit disponible.

4. Procédé selon la revendication 1, la revendication 2 ou la revendication 3, **caractérisé en ce que** le procédé comprend l'étape consistant à déterminer de manière continue la grandeur du couple de décélération obtenu par une décélération électrique.

**5.** Procédé selon la revendication 4, **caractérisé en ce que** le procédé comprend également les étapes consistant à limiter le couple de décélération obtenu par une décélération électrique, lorsque le couple de décélération instantané dépasse une limite réglée pour la mécanique du système.

**6.** Procédé selon l'une quelconque des revendications précédentes 1 à 5, **caractérisé en ce que** le procédé comprend les étapes consistant à :

déterminer, une fois que la feuille de papier continue en provenance de la bobine de machine s'est rompue, l'énergie liée au mouvement de rotation de la bobine de machine sur la base de la vitesse angulaire et de l'inertie de la bobine de machine ;

déterminer la quantité d'énergie qui est obtenue par une décélération électrique ;

comparer les quantités d'énergie déterminées ci-dessus ; et

déterminer la nécessité d'utiliser un frein mécanique, lorsque la quantité d'énergie obtenue par une décélération électrique est inférieure à l'énergie liée au mouvement de rotation.

**7.** Procédé selon la revendication 6, **caractérisé en ce que** le procédé comprend également l'étape consistant à déterminer le moment où il convient d'utiliser le frein mécanique sur la base de la comparaison des quantités d'énergie.

**8.** Appareil destiné à décélérer une bobine de machine commandée par un convertisseur (2) dans une machine à papier, l'appareil comprenant un frein mécanique (3) approprié pour décélérer la bobine de machine, l'appareil comprenant :

des moyens destinés à détecter une rupture dans une feuille de papier continue en provenance de la bobine de machine (2) ;

des moyens destinés à déterminer l'inertie de la bobine de machine (2) ;

des moyens destinés à déterminer de manière continue la vitesse angulaire de la bobine de machine ;

des moyens destinés à déterminer le couple requis pour décélérer la bobine de machine sur la base de l'inertie et de la vitesse angulaire afin d'arrêter la bobine de machine dans un temps prédéfini ;

des moyens (4, 5, 6, 7) destinés à décélérer de manière électrique la bobine de machine pour l' arrêter ;

**caractérisé par** des moyens destinés à utiliser le frein mécanique (3), lorsque la vitesse de rotation de la bobine de machine (2) est inférieure à la vitesse de rotation prédéfinie et lorsque le couple obtenu par la décélération électrique est trop faible pour arrêter la bobine de machine dans un temps prédéfini.

**9.** Produit programme d'ordinateur qui comprend un code de programme d'ordinateur, dont l'exécution dans un ordinateur fait que l'ordinateur exécute les étapes consistant à :

détecter une rupture dans une feuille de papier continue en provenance de la bobine de machine ;

déterminer l'inertie de la bobine de machine ;

déterminer de manière continue la vitesse angulaire de la bobine de machine ;

déterminer de manière continue le couple requis pour décélérer la bobine de machine sur la base de l'inertie et de la vitesse angulaire afin d'arrêter la bobine de machine dans un temps prédéfini ;

générer un signal destiné à décélérer de manière électrique la bobine de machine pour l'arrêter ;

**caractérisé par** l'émission d'un signal enjoignant d'utiliser le frein mécanique lorsque la vitesse de rotation de la bobine de machine est inférieure à la vitesse de rotation prédéfinie et lorsque le couple obtenu par la décélération électrique est trop faible pour arrêter la bobine de machine dans un temps prédéfini.

FIG 1

EP 2 206 667 B1

FIG 2

FIG 3

T / Nm

41

42

FIG 4

n$_{lim}$

n / rpm

T / Nm

51

52

53

54

FIG 5

n / rpm

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 29604401